# EUROPÄISCHE PATENTANMELDUNG

(11) **EP 1 657 054 A1**
(43) Veröffentlichungstag der Anmeldung: **17.05.2006**
(21) Anmeldenummer: 04027036.5
(22) Anmeldetag: 13.11.2004
(51) Int. Cl.: B32B 9/04, F16J 15/10

(54) **Laminiertes Dichtungsmaterial und Verfahren zu seiner Herstellung**

(30) Priorität: 25.08.2004 DE 102004041043
(71) Anmelder: Klinger AG, 6304 Zug (CH)
(72) Erfinder: Latte, Jörg, Dr., 5707 Sengen (CH); Hochstrasser, Urs, 5722 Gränichen (CH)
(74) Vertreter: Sparing Röhl Henseler Patentanwälte European Patent Attorneys

(57) **Zusammenfassung**

Die Erfindung betrifft ein laminiertes Dichtungsmaterial aus wenigstens zwei miteinander verbundenen Schichten, von denen wenigstens eine erste Schicht eine Graphitfolie (1) ist, die mit einer zweiten Schicht aus Graphitfolie (1), Fluorpolymer (2, 3) oder Papier verbunden ist, wobei die erste und zweite Schicht mittels einer über eine vorzugsweise wässrige Dispersion (4) aufgebrachte Schicht aus Fluorpolymer miteinander verklebt sind.

## Beschreibung

Die Erfindung betrifft ein laminiertes Dichtungsmaterial und ein Verfahren zu seiner Herstellung.

Dichtungsmaterialien in Form von Graphit-Laminaten sind seit langem bekannt. Zu ihrer Herstellung werden Folien aus expandiertem Graphit unterschiedlicher Dicke und Dichte zu Platten grösserer Dicke laminiert. Der Grund hierfür ist, daß diese Folien wirtschaftlich nur mit einer Dicke von 1,0 mm bis 1,5 mm und in Ausnahmefällen bis zu 3,0 mm hergestellt werden können. Zum Erzielen größerer Dicken und/oder zur Stabilisierung der empfindlichen Graphitfolien werden anwendungsspezifisch folgende Methoden angewandt:
1. Zusammenkleben mindestens zweier Folien mittels eines Klebers,
2. Imprägnieren von Einzelfolien und Laminaten mit Polymeren,
3. Auflaminieren von Folien auf ein Spießblech, wodurch eine mechanische Verklammerung mit dem Spießblech ohne Verwendung eines Klebers erzielt wird,
4. Aufkleben zweier Folien oder Laminate auf beide Seiten eines Glattblechs,
5. Einpressen eines Streckmetalls in beidseitig aufgelegte Folien, wobei zur Haftung ein Kleber verwendet wird.

Bei Verwendung von Klebern und Imprägnierungsmitteln wird allerdings das auch bei relativ hoher Temperatur stabile Reingraphit bei erhöhter Temperatur durch Erweichung und anschließender Pyrolyse der organischen Kleber und Imprägnierungsmittel destabilisiert. Bei spezifischer Verwendung als Vormaterial für Flachdichtungen wirkt sich dies außerordentlich negativ aus, da einmal abhängig von der verwendeten Menge des Klebers und/oder Imprägnierungsmittels die Druckbelastbarkeit der Dichtung abfällt und bei eintretender Pyrolyse eine Verringerung der Dichtheit eintritt.

Bei mechanisch auf ein Spießblech auflaminierten Folien, bei denen die oben genannten Nachteile nicht auftreten können, ist die Gasdichtheit aufgrund von Leckagekanälen entlang den Grenzflächen zum Blech ein Problem.

Graphitfolien werden kommerziell zur Zeit in den spezifischen Dichten von 0,7 g/cm³, 1,0 g/cm³ und 1,4 g/cm³ angeboten. Eine höhere Dichte als 1,4 g/cm³ ist zur Zeit technisch in wirtschaftlichen Mengen nicht herstellbar. Dies führt dazu, daß alle bisher angebotenen Dichtungen auf Basis von Graphit eine zu hohe Leckage aufweisen und damit nicht die Bedingungen für eine hochwertige Dichtung im Sinne der TA-Luft (VDI-Vorschrift 2440 zur Reinhaltung der Luft, VDI = Verein Deutscher Ingenieure) erfüllen.

Um trotzdem eine hochwertige Dichtung herstellen zu können, ist es bekannt, Barrieren ins Graphitlaminat einzubauen durch:
1. Imprägnieren, mit den schon genannten Nachteilen,
2. durch Streckmetallverstärkung, wobei das Gitternetz des Streckmetalls den nichtmetallischen Querschnitt der Dichtung verringert bei gleichzeitigem Aufbau von Drucklinien entlang des Streckgitters und dadurch bewirkter Verdichtung des Graphits. Trotzdem muss noch ausreichend Kleber verwendet werden, der wie eine Imprägnierung wirkt, so daß sich auch hier die obigen Nachteile ergeben,
3. durch Aufbringung von Bördeln an den Innenkanten von Dichtungen, was aufwendig und teuer ist.

Ferner ist es an sich - beispielsweise bei Pfannen - bekannt, Substrate mit Polytetrafluorethylen (PTFE) zu beschichten, um ein Anhaften von Fremdpartikeln am Substrat zu unterbinden. Dieser Effekt wird auch bei Dichtungsplatten und Dichtungen genutzt, die außenseitig mit PTFE als Trennmittel beschichtet werden, um ein Anhaften am Flansch zu verhindern und damit die Instandhaltungskosten niedrig zu halten.

Aufgabe der Erfindung ist es, ein aus wenigstens zwei Schichten laminiertes Dichtungsmaterial zu schaffen, das wenigstens eine Schicht aus einer Graphitfolie aufweist und zu deren Befestigung kein herkömmlicher Kleber oder ein Imprägnierungsmittel benötigt wird.

Diese Aufgabe wird entsprechend den Merkmalen des Anspruchs 1 gelöst.

Die Erfindung betrifft dementsprechend ein laminiertes Dichtungsmaterial aus wenigstens zwei miteinander verbundenen Schichten, von denen wenigstens eine erste Schicht eine Graphitfolie ist, die mit einer zweiten Schicht aus Graphitfolie, Fluorpolymer oder Papier verbunden ist, wobei die erste und zweite Schicht mittels einer über eine vorzugsweise wässrige Dispersion aufgebrachte Schicht aus Fluorpolymer miteinander verklebt sind. Überraschenderweise wurde gefunden, daß im Zusammenhang mit einer Graphitfolie, die mit einer weiteren Graphitfolie oder einer Platte oder Folie aus Fluorpolymer oder Papier (Dichtungspapier) zusammen laminiert werden soll, eine Dispersion aus Fluorpolymer als Kleber oder Verbindungsmittel funktioniert.

Wird Graphitfolie unabhängig von deren Dichte mit einer Dispersion aus Fluorpolymer beispielsweise durch Aufsprühen, Aufrakeln, Siebdruck, Aufwalzen oder Tauchen beschichtet, kann sie - nach Abtrocknen der Dispersion - mit einer zweiten Graphitfolie und/oder einer Platte oder Folie aus Fluorpolymer oder Papier (Dichtungspapier), deren beteiligte Seite in gleicher Weise behandelt ist oder aber auch unbehandelt sein kann, alleine durch Druck untrennbar zusammengefügt werden. Eine gleichzeitige Temperaturerhöhung beim Zusammenfügen ist hilfreich. In dieser Weise können Graphitlaminat- bzw. Graphitkompositplatten beliebiger Dicke erzeugt werden.

Zur weiteren Stabilisierung eines solchen Graphit- bzw. Graphitkompositlaminates kann sich ein für das Fluorpolymer typischer Sinterprozess drucklos oder unter Pressdruck bei üblichen Sinterbedingungen anschließen. Platten- oder Folienmaterial aus Fluorpolymer kann gesintert oder ungesintert zur Herstellung des Graphit- bzw. Graphitkompositlaminats eingesetzt werden.

Aus dem laminierten Dichtungsmaterial, ungesintert oder gesintert, können Formteile, z.B. Dichtungen aber auch beliebig geformte Körper ausgestanzt, ausgesägt, ausgeschnitten oder ausgefräst werden.

Überraschenderweise hat sich aber auch gezeigt, daß beim Stanzen mit geeigneten Stanzwerkzeugen aus entsprechend mit der Dispersion versehenen Folien bzw. Platten im Stanzwerkzeug Teile grösserer Dicke festbindend zusammenlaminiert werden können. Auf diese Weise können z.B. Dichtungen üblicher Dicke z.B. 1,5 mm oder 2,0 mm oder gegebenenfalls auch in beliebiger Dicke nur aus sehr dünnen Graphitfolien erhalten werden, ohne den Weg über einen Plattenlaminataufbau und anschließendes Ausstanzen od.dgl. zu gehen. Dies kann ein kostengünstiger Weg beispielsweise zum Herstellen von Ventilringen oder Hahnbüchsen sein. Bei diesen Funktionsteilen von Ventilen kommt es neben einer Abdichtung auch auf eine möglichst geringe Stellkraft bei der Ventilbetätigung an. Um die Reibkraft zwischen diesen Funktionselementen am Ventilkolben oder der Ventilspindel gering zu halten, werden diese Teile heute in PTFE Dispersionen getaucht, wobei jedoch nur eine geringe Oberflächenimprägnierung erreicht wird, die durch Abrieb aber nach einiger Zeit verschwindet, wodurch die bei einer Ventilbetätigung aufzuwendende Stellkraft mit zunehmender Lebensdauer wieder ansteigt. Die Erfindung ermöglicht es, laminierte Ventilringe mit einer reibungsmindernden Schicht aus Fluorpolymer wie PTFE einfach herzustellen, weswegen dann die Reduzierung der Reibkraft dauerhaft ist.

Mit der Dispersion beschichtete Folien lassen sich auf Streckmetall ohne Verwendung eines Klebers auflaminieren, da das Streckmetall entsprechende Öffnungen aufweist, in denen die Folien nach Abtrocknung der Dispersion durch die gebildete Fluorpolymerschicht zusammen geklebt werden. Anstelle von Streckmetall läßt sich auch ein Lochblech oder ein Drahtgeflecht verwenden, die genügend große Zwischenräume aufweisen, um eine Verklebung im Bereich der Zwischenräume zu ermöglichen. - Die Laminate können auch durch ein Spießblech verstärkt werden, indem sie auf beiden Seiten hiervon aufgebracht werden.

Das laminierte Dichtungsmaterial der Erfindung bietet den Vorteil, daß das als Kleber verwendete Fluorpolymer, insbesondere PTFE, eine entsprechend hohe Temperaturbeständigkeit im Vergleich zu üblichen Klebern oder Imprägnierungsmitteln aufweist, so daß der Temperaturanwendungsbereich dieses laminierten Dichtungsmaterials bzw. daraus hergestellter Dichtungen und Formkörper fast so hoch wie beim Graphit, beispielsweise etwa 370° geht.

Folien und Platten aus Fluorpolymer, die hier verwendbar sind, können mit Füllstoffen gefüllt oder ungefüllt oder expandiert sein. Besonders harte, hoch gefüllte Platten können durch Auflaminieren von Graphitfolien daraus hergestellten Dichtungen die notwendige Anpassungsfähigkeit an Flanschrauhigkeiten verleihen. Bei Graphitventilringen mit dickeren Schichten aus Fluorpolymer (gefüllt oder ungefüllt) wirken sich diese, wie bereits erwähnt, außerdem positiv auf die notwendige Stellkraft bei der Ventilbetätigung aus.

Fluorpolymere umfassen hierbei auch Abkömmlinge und Polymere, die durch Copolymerisation des jeweiligen Basismonomeren mit anderen fluorhaltigen Comonomeren entstehen, sowie Mischungen aus Fluorpolymeren. Zu diesen sogenannten Fluorpolymeren gehört neben PTFE z.B. ETFE, FEP, PCTFE, ECTFE, PVDF, PVF, PFA, MFA, TFEHFPVDF (THV) aber auch AF, ein in halogenierten Lösungsmitteln lösliches Polymer als Co-Polymerisat von PDD und TFE.

Nachstehend wird die Erfindung anhand von Ausführungsbeispielen erläutert.

Fig. 1 zeigt auseinander gezogen einen Schichtaufbau einer Ausführungsform eines laminierten Dichtungmaterials.

Fig. 2 und 3 zeigen im Schnitt den Schichtaufbau weiterer Ausführungsformen eines Dichtrings aus laminiertem Dichtungmaterial.

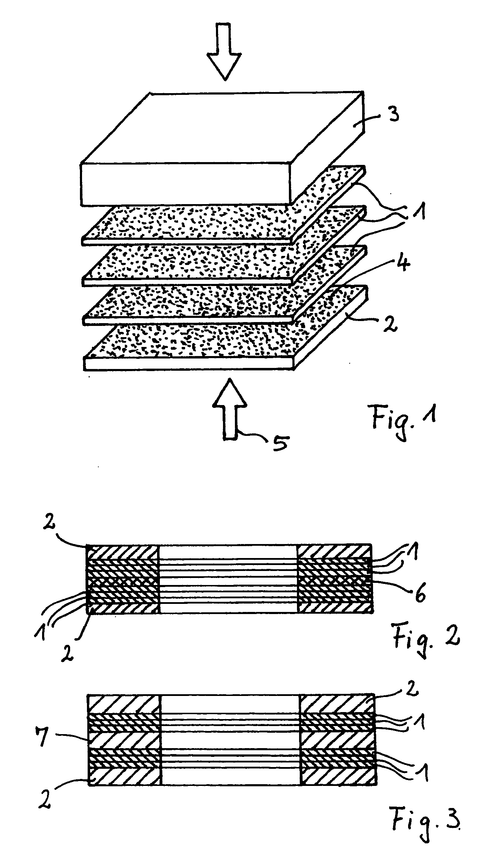

Der in Fig. 1 dargestellte Schichtaufbau einer Ausführungsform eines laminierten Dichtungmaterials umfaßt mehrere Graphitfolien 1 aus Reingraphit, eine außenliegende PTFE-Folie 2 (oder Dichtungspapier) und eine ebenfalls außenseitig befindliche PTFE-Platte 3. Auf die Folien 1, 2 wird ein- oder beidseitig eine Dispersion 4 aus Fluorpolymer (PTFE) aufgebracht. Dann läßt man die Dispersion 4 abtrocknen, so daß das Feststoffmaterial der Dispersion 4 verbleibt. Die Dispersion 4 aus Fluorpolymer kann gegebenenfalls auch für Fluorpolymere typische Füllstoffe enthalten, die nach dem Abtrocknen ebenfalls verbleiben. Zur Herstellung des laminierten Dichtungsmaterials werden diese Schichten in einer Presse oder einem Kalander miteinander unter Preßdruck (dargestellt durch die Pfeile 5) in Berührung gebracht und so miteinander über das als Dispersion 4 aufgebrachte Fluorpolymer als Kleber zu einem laminierten Dichtungsmaterial verklebt.

Bei der Dispersion 4 handelt es sich vorzugsweise um eine wässrige Dispersion, jedoch kann auch eine Dispersion auf der Basis einer organischen Flüssigkeit, etwa eines Alkohols od.dgl.

Bei dem in Fig. 2 dargestellten Dichtungsring ist eine mittig angeordnete Streckmetallschicht 6 vorgesehen, auf deren beiden Seiten jeweils (eine oder) mehrere miteinander durch eine PTFE-Dispersion verklebte Graphitfolien 1 aufgebracht sind, die durch die Öffnungen im Streckmetall wiederum miteinander und ferner jeweils außenseitig mit einer PTFE-Folie 2 über die PTFE-Dispersion verklebt sind. - Anstelle einer Streckmetallschicht kann auch ein Lochblech bzw. ein Drahtgeflecht mit genügend großen Zwischenräumen verwendet werden.

Bei dem in Fig. 3 dargestellten Dichtring ist anstelle der Streckmetallschicht 6 von Fig. 2 eine mit den benachbarten Graphitfolien 1 verklebte PTFE-Folie 7 vorgesehen. - Hierbei können auch die PTFE-Folien 2 weggelassen sein, so daß sich außenseitig Graphitfolien 1 befinden.

Laminiertes Dichtungsmaterial etwa in Form eines Dichtrings, wie in Fig. 2 bzw. 3 dargestellt ist, einer Flachdichtung, einer Stopfbüchse od.dgl. kann als solches in einer Presse aus entsprechend geformten Folienteilen gebildet oder aus einem vorher zu einer Platte laminiertem Dichtungsmaterial durch Stanzen, Schneiden od.dgl. erhalten werden.

## Patentansprüche

1. Laminiertes Dichtungsmaterial aus wenigstens zwei miteinander verbundenen Schichten, von denen wenigstens eine erste Schicht eine Graphitfolie (1) ist, die mit einer zweiten Schicht aus Graphitfolie (1), Fluorpolymer (2, 3, 7) oder Papier verbunden ist, **dadurch gekennzeichnet, daß** die erste und zweite Schicht mittels einer über eine Dispersion (4) aufgebrachte Schicht aus Fluorpolymer miteinander verklebt sind.

2. Material nach Anspruch 1, **dadurch gekennzeichnet, daß** die Dispersion (4) eine wässrige ist.

3. Material nach Anspruch 1 oder 2, **dadurch gekennzeichnet, daß** die Schicht aus Fluorpolymer gefüllt oder ungefüllt ist.

4. Material nach einem der Ansprüche 1 bis 3, **dadurch gekennzeichnet, daß** die Schicht aus Fluorpolymer eine Folie (2, 7) oder eine Platte (3) ist.

5. Material nach einem der Ansprüche 1 bis 4, **dadurch gekennzeichnet, daß** wenigstens eine Metallverstärkungsschicht vorhanden ist.

6. Material nach Anspruch 5, **dadurch gekennzeichnet, daß** die Metallverstärkungsschicht eine Streckmetallschicht (6) ist.

7. Material nach Anspruch 5, **dadurch gekennzeichnet, daß** die Metallverstärkungsschicht eine Spießblechschicht ist.

8. Material nach einem der Ansprüche 1 bis 7, **dadurch gekennzeichnet, daß** die Metallverstärkungsschicht ein Lochblech oder ein Drahtgeflecht mit großen Zwischenräumen ist.

9. Material nach einem der Ansprüche 1 bis 8, **dadurch gekennzeichnet, daß** die Dispersion eine Polytetrafluorethylendispersion ist.

10. Verfahren zur Herstellung eines laminierten Dichtungsmaterials aus wenigstens zwei miteinander verbundenen Schichten, von denen wenigstens eine erste Schicht eine Graphitfolie ist, die mit einer zweiten Schicht aus Graphitfolie, Fluorpolymer oder Papier verbunden wird, **dadurch gekennzeichnet, daß** auf wenigstens eine von zwei miteinander zu verbindenden Schichten eine Dispersion aus Fluorpolymer aufgetragen und nach dem Abtrocknen der Dispersion aneinander gedrückt und so miteinander verklebt werden.

11. Verfahren nach Anspruch 10, **dadurch gekennzeichnet, daß** als Dispersion eine wässrige verwendet wird.

12. Verfahren nach Anspruch 10 oder 11, **dadurch gekennzeichnet, daß** die Schichten aufeinander gepreßt werden.

13. Verfahren nach einem der Ansprüche 10 oder 12, **dadurch gekennzeichnet, daß** die Schichten unter Einwirkung von erhöhter Temperatur aufeinander gepreßt werden.

14. Verfahren nach einem der Ansprüche 10 bis 13, **dadurch gekennzeichnet, daß** die Schichten in einer Presse aufeinander gedrückt werden.

15. Verfahren nach einem der Ansprüche 10 bis 13, **dadurch gekennzeichnet, daß** die Schichten in einem Kalander aufeinander gedrückt werden.

16. Verfahren nach einem der Ansprüche 10 bis 15, **dadurch gekennzeichnet, daß** nach dem Laminieren gesintert wird.
